# EUROPEAN PATENT APPLICATION

(11) **EP 1 571 837 A2**
(43) Date of publication of application: **07.09.2005**
(21) Application number: 05250999.9
(22) Date of filing: 22.02.2005
(51) Int. Cl.: H04N 5/445

(54) **Providing and reproducing an EPG**

(30) Priority: 01.03.2004 GB 0404599
(71) Applicant: SONY UNITED KINGDOM LIMITED, Surrey KT13 0XW (GB)
(72) Inventor: Boulanger, Philippe, 1410 Waterloo (BE)
(74) Representative: Smith, Samuel Leonard

(57) **Abstract**

A method and receiver for reproducing an EPG which is broadcast as EPG data including branding image data for producing a branding image for display with the EPG and at least one marker for identifying the branding image data wherein, when the EPG is reproduced from received EPG data, the at least one marker is recognised and, as a result, the branding image data identified by the at least one marker is ignored such that the EPG is reproduced without the corresponding branding image.

## Description

The present invention relates to a method of reproducing an electronic programme guide and also a receiver for doing the same. It also relates to a method of providing an electronic programme guide and also to a system in which the electronic programme guide is provided and reproduced.

It is well known in the broadcast television industry to provide electronic programme guides which present the user with information regarding television programmes. The electronic programme guide (EPG) is broadcast with auxiliary data with a television signal. It may broadcast with a single television channel and may give information regarding television programmes on that channel as well as other channels. On some television channels, audio only (e.g. radio broadcasts) is broadcast with auxiliary data.

The present application recognises that there may be commercial advantages in providing for display with the EPG, images, logos and the like relating to the EPG service provider or other services or products. These images could be in the form of graphics or text and could be provided as background images to the EPG or in areas of the display not used by the EPG.

In certain circumstances, the EPG may be broadcast in an environment where these additional images are not desired.

According to the present invention, there is provided a method of providing an EPG, the method including:
providing EPG data for representing the EPG;
providing, as part of the EPG data, branding image data for representing a branding image such that reproduction of the EPG data will result in display of the EPG with the branding image; and
providing at least one marker to identify the branding image data such that the branding image data can be ignored during reproduction of the EPG data and the EPG data displayed without the branding image.

In this way, although the EPG as transmitted or broadcast includes the desired branding information, it is provided with markers which allow its removal. Preferably the markers are detected at the receiver but are not themselves displayed on screen.

Hence, according to the present invention, there is also provided a method of reproducing at a broadcast receiver an EPG which is transmitted or broadcast to the broadcast receiver as EPG data including branding image data for producing a branding image for display with the EPG and at least one marker for identifying the branding image data, the method including:
at the broadcast receiver, recognising the at least one marker and ignoring branding image data identified by said at least one marker so as to reproduce the EPG without the corresponding branding image.

Similarly, there is provided a receiver for an EPG which is transmitted or broadcast as EPG data including branding image data for producing a branding image for display with the EPG and at least one marker for identifying the branding image data, the receiver including:
a processor for reproducing an EPG from received EPG data, the processor being arranged to recognise the at least one marker and ignore branding image data identified by said at least one marker such that the EPG is reproduced without the corresponding branding image.

Thus, although the EPG is broadcast with the branding image embedded in it for automatic display, it is possible, by means of the markers, to identify and remove the branding image.

Considering both the broadcast of the EPG and its reception, according to the present invention, there is also provided a broadcast system including:
a transmit processor for producing EPG data for an EPG and for including, in the EPG data, branding image data for a branding image to be displayed with the EPG; and
a receive processor for reproducing an EPG from received EPG data; wherein
the transmit processor is arranged additionally to include in the EPG data at least one marker for identifying the branding image data; and
the receive processor is arranged to recognise the at least one marker and ignore branding image data identified by said at least one marker such that the EPG is reproduced without the corresponding branding image.

It will be appreciated that, in a preferred embodiment, the invention is embodied in a broadcast television environment. Hence, preferably, the receiver is one of a set top box and an integrated digital television receiver, a PC TV tuner card or a gaming console equipped with a TV tuner. The invention may also be embodied in any portable display device equipped with a TV tuner, e.g. a mobile phone. Such broadcasts may be made according to the DVB-H standard.

The receiver can thus be preset by the manufacturer or the broadcast service provider to remove the branding images as required.

Where the branding images are removed, it is possible for them to be replaced by substitute branding images. Once again, this can be pre-set by the service provider or the manufacture of the receivers.

Preferably, the EPG data is broadcast with a television signal and includes listings of television programmes.

The EPG data may include GUI data. This is a digital teletext service rather than a traditional EPG in which, for example, backgrounds and position data are broadcast with EPG data. An example of such a service is BBCi™. Such a service may be broadcast such that a viewer is able to request its display direct from within a channel which is currently being viewed. Alternatively, a viewer is able to select a channel carrying only a digital teletext service, without broadcast television images.

The EPG data may be broadcast as DVB-SI data in a transport stream with TV image data. The EPG data is displayed in a graphical user interface, the graphics being generated by an on-screen display generator in the receiver and the EPG data being inserted into the graphical user interface. Such an EPG may be a now/next EPG which shows information for the current and next programme for any one channel to which the receiver is tuned. Such a Now/Next EPG may be generated to occupy only part of the screen allowing a viewer to continue to watch the television images being broadcast on that channel.

The EPG data may be broadcast on a single television channel. This may include a virtual channel, and may include data for television program listings on a number of channels and/in broadcast in a number of different transport streams. The receiver inserts the EPG data into a graphical user interface which is displayed as a full screen. This may be full EPG, in which listing for a full day, week or month may be displayed. Of course television images can be displayed in a portion of the screen in addition to the full EPG.

The branding image may take the form of a copyright notice. The copyright notice may be provided in EPG data as DVB-SI data and be displayed in an EPG.

Apart from DVB-SI data, the EPG data, including any copyright notice, may be broadcast in any similar digital stream, such as DSMCC.

The branding image may include at least one logo in the form of a graphics image. The graphics image may be a moving graphics image.

It will be appreciated that the invention can be embodied in software as well as hardware. Hence, a computer program or a computer program product comprising program code means may be provided for performing the steps of the invention. The ability to detect and remove branding may require an update of EPG software stored in flash memory in a TV receiver. Such an update may take the form of an over-the-air download. Hence, a signal bearing information representative of the computer program also falls within the scope of this invention.

The invention will be more clearly understood from the following description given by way of example only, with reference to the accompanying drawings, in which:
Figure 1 illustrates schematically an overall broadcast system;
Figure 2(a) and (b) illustrate television receivers which can embody the present invention;
Figure 3(a), (b) and (c) illustrate EPGs with a branding image;
Figure 4 illustrates schematically a data structure for an EPG;
Figure 5 illustrates schematically a receive processor embodying the present invention; and
Figure 6 illustrates an EPG with the branding image absent.

In a broadcast television system, television programmes are prepared in a transmission system 2. In the illustrated embodiment, these are broadcast by means of an ariel 4. In other embodiments, cable, satellite etc may be used.

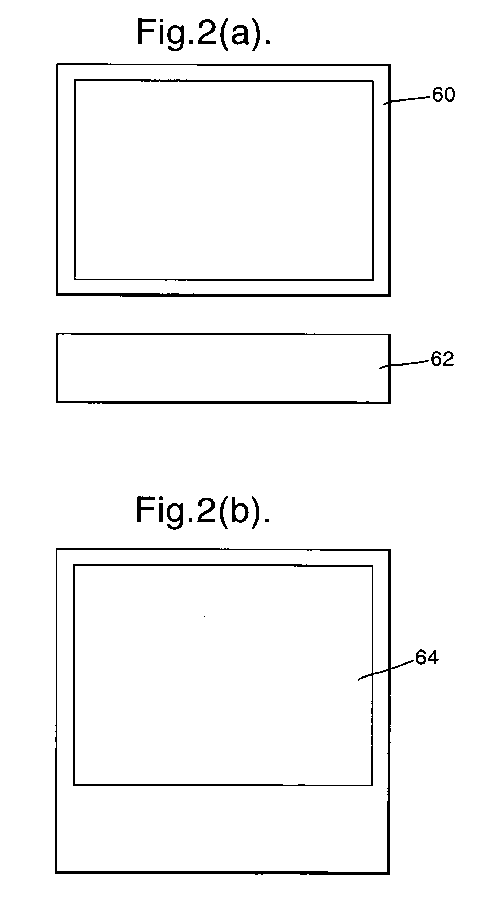

A receive system 6 receives the television programmes by means of an ariel 8. The receive system 6 could be a set top box 62 or an integrated television receiver 64 as illustrated in Figures 2(a) and 2(b). Alternatively, it might comprise a central receiver for supplying a plurality of televisions.

A number of different transmission systems 2 may exist. However, the present invention considers the case where at least one of these transmission systems 2 includes a transmit processor 10 for producing electronic programme guide (EPG) data.

In general, EPGs are well known. They provide listings of television programmes broadcast on the channel with which the EPG is sent and, usually, other channels. The EPG may also include various functionality allowing the user to navigate between the channels.

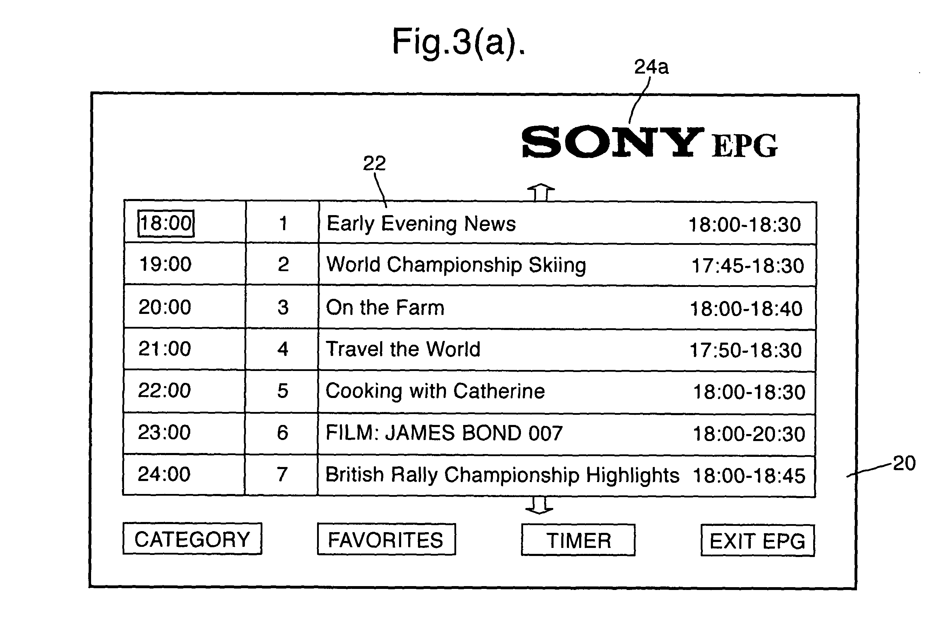

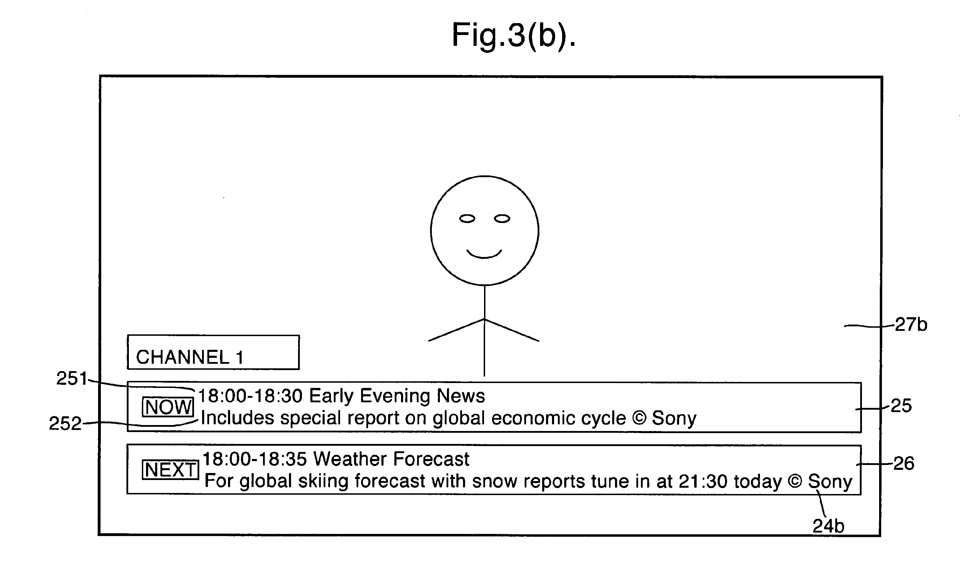

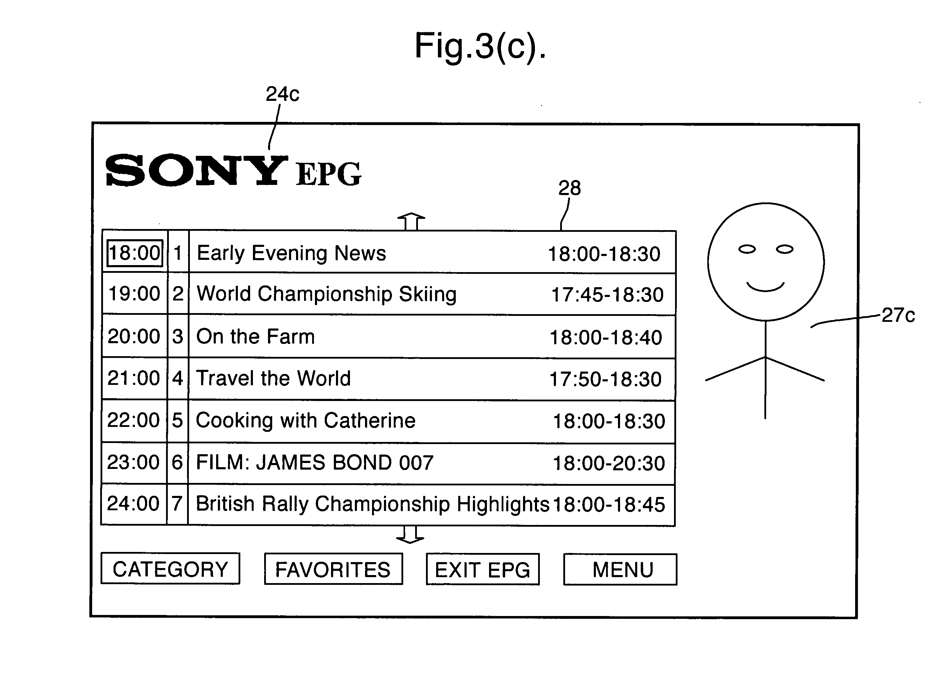

Figure 3a illustrates an example of a possible full EPG.

The EPG data forming the EPG is transmitted as auxiliary data with the television signal. In particular, the EPG data may be broadcast as DVB-SI data for each channel or transport stream for display in a graphical user interface generated by an on-screen display processor in the receiver.

As illustrated in Figure 3a, the EPG 20 includes not only the normal programme information 22, but also a branding image 24, in this case advertising the manufacturer "Sony", or indicating that it is part of a "Sony EPG" service. The branding image may be a copyright notice, if appropriate.

Figure 3b shows a Now/Next EPG in which the user is able to get information 25 on what programs are currently being shown on the channel being watched. Feature 27b represents television images of the channel being watched. Details of the next scheduled program 26 are also displayed. Information 25 comprises time and title information 251 and extra metadata 252 giving the viewer further details on the content of the programme. In this instance, the metadata may be owned by Sony, and it may be advantageous to remind users of the ownership of that metadata by displaying the copyright notice "(c) Sony", 24b. The copyright notice 24b may appear anywhere in the EPG. The copyright notice, 24b may broadcast as part of the EPG data in the form of DVB-SI data and inserted by the receiver in the graphical user interface generated by the on-screen display generator.

Figure 3c shows a broadcast EPG such as a digital teletext service. In this case the EPG data is broadcast with GUI data such as table arrangement 28. Television images 27c from the television channel being watched may be seen in a smaller "preview" mode contemporaneously with the broadcast EPG. Branding image data is broadcast together with and/or as part of the EPG data, the EPG data further including GUI data. Branding image 24c is reproduced in the broadcast EPG.

Where users of the receive system 6 are provided with their service from Sony and/or use Sony equipment, this is clearly advantageous in reminding them of their service provider and/or equipment provider. However, in certain circumstances, with different service providers and/or equipment, it may be undesirable to include the branding image 24a, 24b or 24c in the display of the EPG 20.

As explained above, the present invention addresses the technical problem of how to allow removal of the branding image.

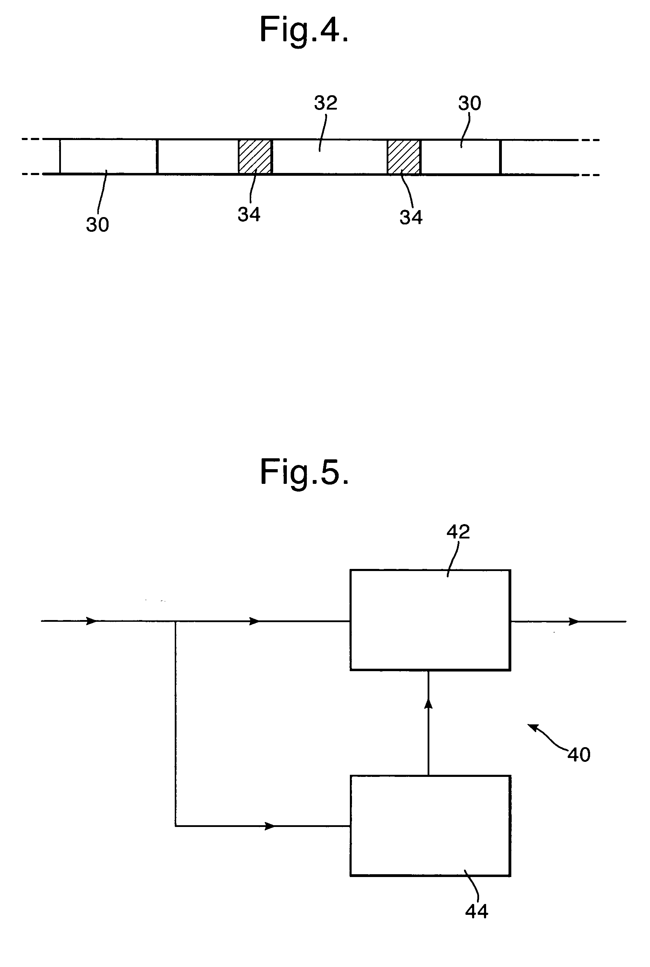

Figure 4 illustrates schematically packets 30 of EPG data. Included in the EPG data is branding image data 32, providing the appropriate information to display a branding image 24, such as illustrated in Figure 3. The branding image could include simple text and/or graphics. If desired, text and/or graphics could move or scroll.

The branding image may be relatively small compared to the entire EPG image and positioned at a particular location within the EPG image. The location and possible movement of this position may be defined in the branding image data. Alternatively, the image could be formed as a background or a visible watermark in the EPG.

As illustrated, the EPG data additionally includes markers 34. A marker may form the entire payload of a packet, or form part of the payload of a packet. Where the branding image data 32 has a predetermined form or length, it may be sufficient to provide one marker 34. The branding image data may be included as the payload of one or more packets according to the size of the branding image data and/or payload capacity of a packet. However, in the embodiment illustrated, markers 34 define the beginning and end of the branding image data. It may be that at specific times, no branding is provided for display. At these times, the markers would not be broadcast, or alternatively, the markers would remain in the EPG data stream, but no branding image data 32 would be broadcast. Packet(s) bearing branding image data 32 could have a null payload. Thus, no branding image would be displayed after decoding at the receiver. Alternatively, the receiver could operate to ignore branding data at specific times.

As will be appreciated, by providing the marker 34, it is possible for a receiver to ignore or replace the branding image data 32.

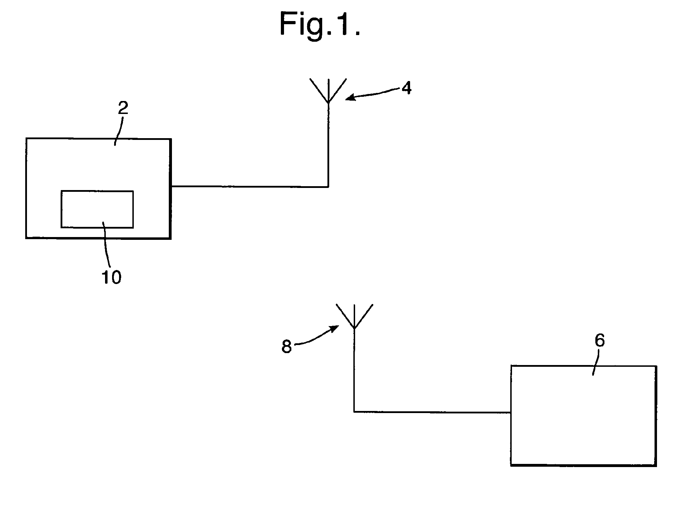

Figure 5 illustrates schematically a processor for use in a receiver such as the receiving system 6 of Figure 1 and the set top box and integrated television of Figures 2 (a) and (b).

The processor 40 includes a display processor 42 for receiving the EPG data and for outputting appropriate information for displaying the EPG. For instance, on the television 60 of Figure 2 (a) or the integrated televison 64 of Figure 2 (b).

The processor also includes a branding image recognition processor 44 which is arranged to recognise the markers 34 and thereby identifying the branding image data 32.

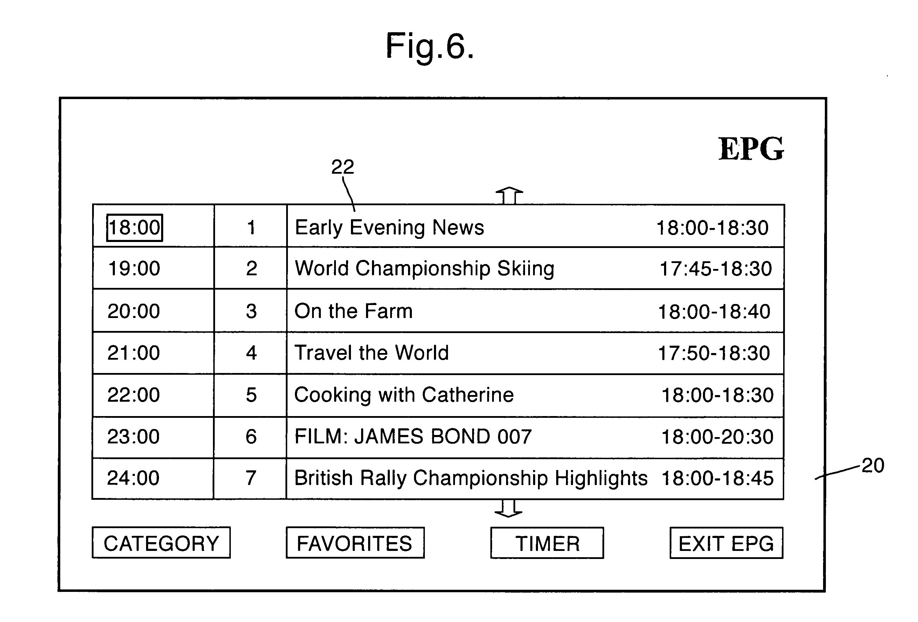

The branding image recognition processor 44 can then control the display processor 42 so as to ignore the branding image data and provide an EPG 20, such as illustrated in Figure 6, with the branding image absent.

In an alternative embodiment, the branding image recognition processor 44 may insert replacement branding image data. In other word, having recognised the branding image data 32 from the markers 34, this branding image data is replaced by alternative branding image data which will result in the display of a different branding image with the EPG. The replacement branding image may be retrieved from a permanent or temporary local memory in the receiver.

In an alternative embodiment, it would also be possible to mask the branding image. Masking could be performed by recognising branding image data 32 from the markers and by laying a rectangle (for example) over the branding image. The rectangle would be of suitable size and of substantially the same colour/shade and luminance as any background EPG graphics. In this way, the branding image would be masked by the rectangle and the branding would be invisible to the viewer.

The embodiments described herein are intended as examples only. It will be appreciated that the invention could be applied to any television system (whether analogue or digital) in which EPG data including branding data and markers can be carried as auxiliary data with the television signal.

Furthermore, although the invention has generally been described with reference to traditional television broadcast, it is also applicable to a file based EPG where a file is transmitted with EPG data inside and the branding filtering process is applied to the file before displaying the EPG information on a device/PC screen. Indeed, the EPG may be internet based, the EPG data being displayed on a web page by a server or being requested by a network device, processed (including stored and forwarded) and displayed by the device or any direct or indirect client of the device.

A television receiver may be connected to an Internet service and receive EPG data and GUI data in the form of web pages. In this sense, the television receiver may be a PC TV tuner card in a personal computer. The EPG may be provided over the internet and the web pages branded by an EPG service provider e.g. "EPG Services Inc.". The PC manufacturer may offer its customers the opportunity to use EPG Services' web pages and agree with EPG Services inc that the branding may be removed.

A plugin compatible with a web browser operating on the personal computer can be loaded on the onto the personal computer. The plugin operates to monitor the EPG data which is in the form of IP packets and detect any marker(s) in the EPG Data. If marker(s) are detected any branding image data is ignore and the EPG is displayed without corresponding branding image. Alternatively, the plugin may be configurable to ignore any branding image data and substitute it for different branding image data, such that a corresponding different branding image is displayed with the EPG. The different EPG branding image data may be stored locally in a memory store of the personal computer or for example downloaded from the internet.

## Claims

1. A method of reproducing at a broadcast receiver an EPG which is transmitted to the broadcast receiver as EPG data including branding image data for producing a branding image for display with the EPG and at least one marker for identifying the branding image data, the method including:
at the broadcast receiver, recognising the at least one marker and ignoring branding image data identified by said at least one marker so as to reproduce the EPG without the corresponding branding image.

2. A receiver for an EPG which is transmitted as EPG data including branding image data for producing a branding image for display with the EPG and at least one marker for identifying the branding image data, the receiver including:
a processor for reproducing an EPG from received EPG data, the processor being arranged to recognise the at least one marker and ignore branding image data identified by said at least one marker such that the EPG is reproduced without the corresponding branding image.

3. A receiver according to claim 2 wherein the receiver is one of a set top box, an integrated digital television receiver, a PC TV tuner card, a gaming console equipped with a TV tuner and any portable display device equipped with a TV tuner.

4. A method of providing an EPG, the method including:
providing EPG data for representing the EPG;
providing, as part of the EPG data, branding image data for representing a branding image such that reproduction of the EPG data will result in display of the EPG with the branding image; and
providing at least one marker to identify the branding image data such that the branding image data can be ignored during reproduction of the EPG data and the EPG data displayed without the branding image.

5. A transmission system including:
a transmit processor for producing EPG data for an EPG and for including, in the EPG data, branding image data for a branding image to be displayed with the EPG; and
a receive processor for reproducing an EPG from received EPG data; wherein
the transmit processor is arranged additionally to include in the EPG data at least one marker for identifying the branding image data; and
the receive processor is arranged to recognise the at least one marker and ignore branding image data identified by said at least one marker such that the EPG is reproduced without the corresponding branding image.

6. A method according to claim 1, a receiver according to claim 2 or 3, a method according to claim 4 or a transmission system according to claim 5 wherein the EPG data is broadcast with a television signal and includes listings of television programmes.

7. A method, receiver or system according to any preceding claim wherein the EPG data includes GUI data.

8. A method, receiver or system according to any preceding claim wherein the EPG data is broadcast as DVB-SI data.

9. A method, receiver or system according to any preceding claim wherein the EPG data is broadcast on a single television channel.

10. A method, receiver or system according to any preceding claim wherein the branding image is a copyright notice and the branding image data is included in DVB-SI data.

11. A method, receiver or system according to any preceding claim wherein the branding image includes at least one logo.

12. A method, receiver or system according to any preceding claim wherein, when the branding image data is ignored, the branding image data is replaced by substitute branding image data representing a substitute branding image.

13. A method according to any preceding claim in which the step of ignoring the branding image data is performed by overlaying a substitute branding image so as to reproduce an EPG without the corresponding branding image, the substitute branding image being substantially of the same colouration and luminosity of the EPG background.

14. A method, receiver or system according to claim 12 or 13 wherein the substitute branding image data is provided locally when reproducing the EPG.

15. A computer program comprising program code means for performing all the steps of claim 1 or any one of claims 6 to 14 when dependent on claim 1 when said program is run on a computer.

16. A signal bearing program code for performing all of the steps of claim 1 or any one of claims 6 to 14 when dependent on claim 1 when said program code is run on a computer.

17. A computer program product comprising program code means stored on a computer readable medium for performing the method of claim 1 or any one of claims 6 to 14 when dependent on claim 1 when said program product is run on a computer.
